# EUROPEAN PATENT SPECIFICATION

(11) **EP 4 254 535 B1**
(45) Date of publication and mention of the grant of the patent: **30.04.2025**
(21) Application number: 23163722.4
(22) Date of filing: 23.03.2023
(51) Int. Cl.: H01M 4/04, H01M 10/0587, H01M 50/103, H01M 50/105, H01M 50/15, H01M 50/533, H01M 50/534, H01M 50/536, H01M 50/538, H01M 50/54, H01M 50/55

(54) **ELECTROCHEMICAL APPARATUS AND ELECTRONIC APPARATUS**
ELEKTROCHEMISCHE VORRICHTUNG UND ELEKTRONISCHE VORRICHTUNG
APPAREIL ÉLECTROCHIMIQUE ET APPAREIL ÉLECTRONIQUE

(30) Priority: 31.03.2022 CN 202210346728
(43) Date of publication of application: 04.10.2023
(73) Proprietor: DONGGUAN POWERAMP TECHNOLOGY LIMITED, Dongguan, Guangdong 523000 (CN)
(72) Inventor: LI, Weiwei, Dongguan City, Guangdong Province, People s Republic of China, 523000 (CN); XIE, Jincang, Dongguan City, Guangdong Province, People s Republic of China, 523000 (CN); FANG, Ye, Dongguan City, Guangdong Province, People s Republic of China, 523000 (CN)
(74) Representative: Icosa

(56) References cited:
- EP-A2- 4 064 401
- WO-A1-2021/227896
- CN-A- 113 270 671
- CN-A- 113 437 444
- US-A1- 2013 316 209
- US-A1- 2019 089 005
- US-A1- 2020 313 145

## Description

### TECHNICAL FIELD

This application relates to the field of energy storage technologies, and in particular, to an electrochemical apparatus and an electronic apparatus.

### BACKGROUND

An electrochemical apparatus is an apparatus that converts external energy into electric energy and that stores the electric energy in the electrochemical apparatus, to supply power to an external device (for example, a portable electronic apparatus) as needed. Generally, an electrochemical apparatus includes a housing, an electrode assembly accommodated in the housing, and tabs. The electrode assembly includes a first electrode plate, a second electrode plate, and a separator, where the first electrode plate and the second electrode plate have opposite polarities, with the separator sandwiched therebetween for separation. One end of one tab is connected to the first electrode plate, and an other end of the tab extends out of the housing; a plurality of conducting strips protrude from an edge of the second electrode plate, where the plurality of conducting strips are stacked; and one end of another tab is welded to the conducting strips stacked, and an other end of the tab extends out of the housing. CN 113437444 A describes relevant electrode tab shape and connections to balance high-rate charge-discharge performance and safety performance of an electrochemical device. EP 4064401 A2 describes a relevant tab of a battery cell having distinct portions connected in sequence.

### SUMMARY

During implementation of this application, the inventors of this application found that when the first tab is experiencing vibration and impact, the first tab directly connected to the first electrode plate is prone to damage at a joint between the first tab and the first electrode plate, resulting in failure of the electrochemical apparatus.

This application intends to provide an electrochemical apparatus and an electronic apparatus, to alleviate the problem that the first tab directly connected to the first electrode plate is prone to damage at a joint between the first tab and the first electrode plate.

The following technical solutions are adopted for this application to resolve the technical problem:
An electrochemical apparatus is provided, including a housing, an electrode assembly, a first tab, and a second tab. The electrode assembly is accommodated in the housing and includes a first electrode plate, a second electrode plate, and a separator disposed between the first electrode plate and the second electrode plate, where the first electrode plate, the second electrode plate, and the separator are stacked and then wound. The first electrode plate includes a first current collector. The second electrode plate includes a second current collector and a plurality of conducting strips integrally arranged with the second current collector, where the plurality of conducting strips protrude from the second current collector along a first direction, the plurality of conducting strips are stacked in a thickness direction of the electrode assembly to form a collecting portion, and the first direction is perpendicular to the thickness direction. The first tab directly connected to the first electrode plate and made of a sheet structure extending in a bent shape as a whole, the first tab includes a first portion, a second portion, and a third portion, where the first portion, the second portion, and the third portion are connected in sequence, the first portion is connected to the first current collector, the second portion is located outside the first current collector and disposed in a bent shape, and the third portion extends out of the housing. The second tab is connected to the collecting portion and extends out of the housing.

Since the first tab includes the second portion disposed in a bent way, when the first tab is impacted, the first tab can relieve part of impact force through deformation of the second portion, such that impact force finally reaching a joint between the first tab and the first electrode plate is reduced to some extent. Therefore, the electrochemical apparatus according to some embodiments of this application can alleviate the problem that the first tab directly connected to the first electrode plate is prone to damage at a joint between the first tab and the first electrode plate caused by external impact.

In some embodiments, the electrode assembly has a first surface and a second surface, where the first surface and the second surface are opposite to each other in the thickness direction, and the second portion includes a first connecting section and a second connecting section. One end of the first connecting section is connected to the first portion and an other end of the first connecting section extends toward the first surface. The second connecting section is located on a side of the first connecting section far away from the electrode assembly, one end of the second connecting section is connected to an end of the first connecting section far away from the first portion, and an other end of the second connecting section is connected to the third portion. Therefore, when the first tab is impacted, the second connecting section bends elastically toward the second connecting section, so as to relieve part of impact force.

In some embodiments, the second portion further includes a bending section. The first connecting section and the second connecting section are oppositely disposed in the first direction, one end of the bending section is connected to an end of the first connecting section facing toward the first surface, and an other end of the bending section is connected to an end of the second connecting section facing toward the first surface. In this way, the second portion is a U-shaped structure as a whole.

In some embodiments, a thickness of the electrode assembly in the thickness direction is L₁ mm. Viewed from a second direction, a distance from an overlapping part of the first portion and the first current collector in the thickness direction to the first surface is L₂ mm, where 0.6 ≤ L₂/L₁ ≤ 0.9. The second direction is perpendicular to the first direction and the thickness direction. Such arrangement can maintain sufficient elasticity of the second portion of the first tab and realize low temperature rise in a charging process of the electrochemical apparatus.

In some embodiments, viewed from a second direction, a distance from an overlapping part of the first portion and the first current collector in the thickness direction to the first surface is L₂ mm. Viewed from a second direction, a distance from the second portion to the first surface in the thickness direction is L₃ mm, where 0.75 ≤ (L₂-L₃)/L₂ ≤ 1. The second direction is perpendicular to the first direction and the thickness direction. Such arrangement allows the electrochemical apparatus to have excellent anti-drop performance and vibration resistance.

In some embodiments, viewed from a second direction, a distance from an end of the third portion close to the second portion to the first surface in the thickness direction is L₄₁ mm, and a distance from an overlapping part of the first portion and the first current collector in the thickness direction to the first surface is L₄₂ mm, where L₄₁/L₄₂ ≤ 1.1. The second direction is perpendicular to the first direction and the thickness direction. When the first tab is impacted by an external force, the second connecting section bends toward the electrode assembly. In the thickness direction, under the condition that an end of the second connecting section facing away from the first surface goes significantly beyond an end of the first connecting section facing away from the first surface, the end of the second connecting section facing away from the first surface may be inserted inversely to touch the second electrode plate in the electrode assembly, causing short circuit to the electrochemical apparatus. Such arrangement with L₄/L₂ ≤ 1.1 is designed to control the end of the second connecting section facing away from the second surface not to go beyond the end of the first connecting section facing away from the first surface, or to go slightly beyond the end of the first connecting section facing away from the first surface, so as to reduce the risk of short circuit.

In some embodiments, a length of the first portion beyond an edge of the second current collector is L₅ mm, where 0.2 ≤ L₅ ≤ 2. Such arrangement is designed to form a specified gap between the second portion and the edge of the second current collector, so as to reduce the risk of the second portion coming into contact with the second electrode plate to some extent due to shaking and the risk of short circuit resulting therefrom.

In some embodiments, the housing includes a body portion and a sealing portion connected to the body portion. The body portion is provided with an accommodating chamber, the electrode assembly is accommodated in the accommodating chamber, and the first tab and the second tab pass through the sealing portion to extend out of the housing. A length of the third portion extending in the accommodating chamber in the first direction is L₆₁, and a length of the second tab extending in the accommodating chamber in the first direction is L₆₂, where |L₆₁-L₆₂| ≤ 1 mm. Such arrangement is designed to enable the electrochemical apparatus to have better anti-drop performance.

In some embodiments, the first tab is welded to the first current collector, and the first tab and the second tab extend out of the housing in the first direction.

In some embodiments, the first electrode plate is an anode electrode plate, and the second electrode plate is a cathode electrode plate. A material of the first tab includes copper, a copper alloy, nickel, or a nickel alloy, and a material of the second tab includes aluminum or an aluminum alloy.

In some embodiments, a cross-section area of the first tab is s₁ mm², a cross-section area of the second tab is s₂ mm², and s₁ > s₂. Tunneling of electrons in or out the first electrode plate is realized by using the first tab, while tunneling of electrons in or out the second electrode plate is realized by using the plurality of conducting strips and the second tab. Compared with the entirety composed of all the conducting strips and the second tab, the first tab is more difficult to dissipate heat. Such arrangement with s₁ > s₂ is beneficial to increase a surface area of the first tab, thereby increasing a heat dissipation rate of the first tab, such that the first tab and the second tab dissipate heat in a more uniform manner.

In some embodiments, the housing includes a body portion and a sealing portion connected to the body portion, where the body portion is provided with an accommodating chamber, the electrode assembly is accommodated in the accommodating chamber, and the first tab passes through the sealing portion to extend out of the housing. The housing is provided with a third surface and a fourth surface, where the first surface and the second surface are opposite to each other in the thickness direction. In the thickness direction, the third surface, the first surface, the second surface, and the fourth surface are sequentially arranged, and a distance from the sealing portion to the third surface is greater than a distance from the sealing portion to the fourth surface. Therefore, the body portion includes a first accommodating space located between the sealing portion and the third surface and a second accommodating space located between the sealing portion and the fourth surface; and the entire second portion is located in the first accommodating space.

In some embodiments, the first electrode plate further includes a first active material layer disposed on the first current collector, a first concave portion is disposed on the first active material layer, the first concave portion exposes the first current collector, and the first tab is disposed at the first concave portion and connected to the first current collector.

The following technical solutions are further adopted for this application to resolve the technical problem:
An electronic apparatus is provided including the foregoing electrochemical apparatus. With the electrochemical apparatus provided, the electronic apparatus can also alleviate the problem that a first tab in the electrochemical apparatus thereof is prone to damage at a joint between the first tab and a first electrode plate caused by external impact.

### BRIEF DESCRIPTION OF DRAWINGS

To describe the technical solutions in some embodiments of this application more clearly, the following briefly describes the accompanying drawings required for describing some embodiments. Apparently, the accompanying drawings in the following descriptions show only some embodiments of this application, and persons of ordinary skill in the art may still derive others drawings from structures shown in these accompanying drawings.
FIG. 1 is a schematic diagram of an electrochemical apparatus according to an embodiment of this application;
FIG. 2 is a schematic cross-sectional diagram of the electrochemical apparatus in FIG. 1 along line A-A;
FIG. 3 is a schematic cross-sectional diagram of the electrochemical apparatus in FIG. 1 along line B-B;
FIG. 4 is a schematic cross-sectional diagram of the electrochemical apparatus in FIG. 1 along line C-C;
FIG. 5 is a schematic diagram of a connection between a first electrode plate and a first tab in a flattened state;
FIG. 6 is a schematic diagram of a connection of a second electrode plate in a flattened state; and
FIG. 7 is a schematic diagram of an electronic apparatus according to an embodiment of this application.

### DETAILED DESCRIPTION

For ease of understanding this application, the following further describes this application in detail with reference to the accompanying drawings and specific embodiments. It should be noted that when an element is expressed as being "fastened/fixed" to another element, it may be directly fastened/fixed to the another element or one or more intermediate elements may be present. When an element is expressed as being "connected" to another element, it may be directly connected to the another element or one or more intermediate elements may be present. The terms "vertical", "horizontal", "left", "right", "inside", "outside", and similar expressions used in this specification are merely for description purposes.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

In this specification, "installing" includes fixing or limiting an element or apparatus to a specific location or place by means of welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in the embodiments of this application.

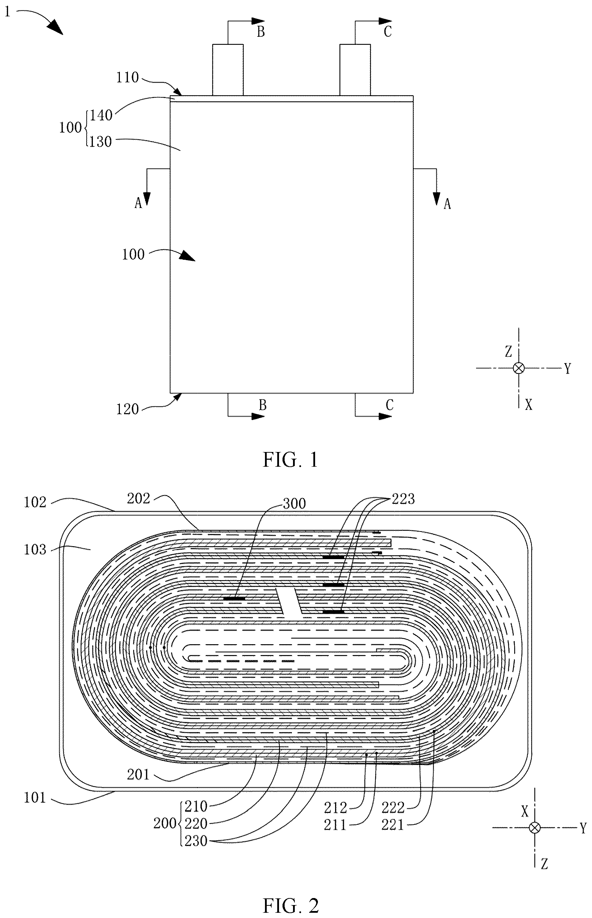

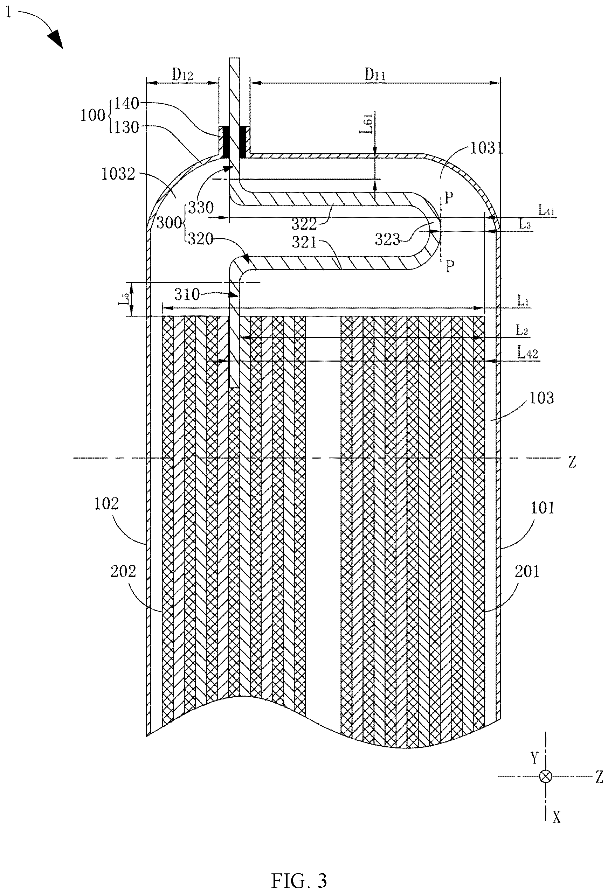

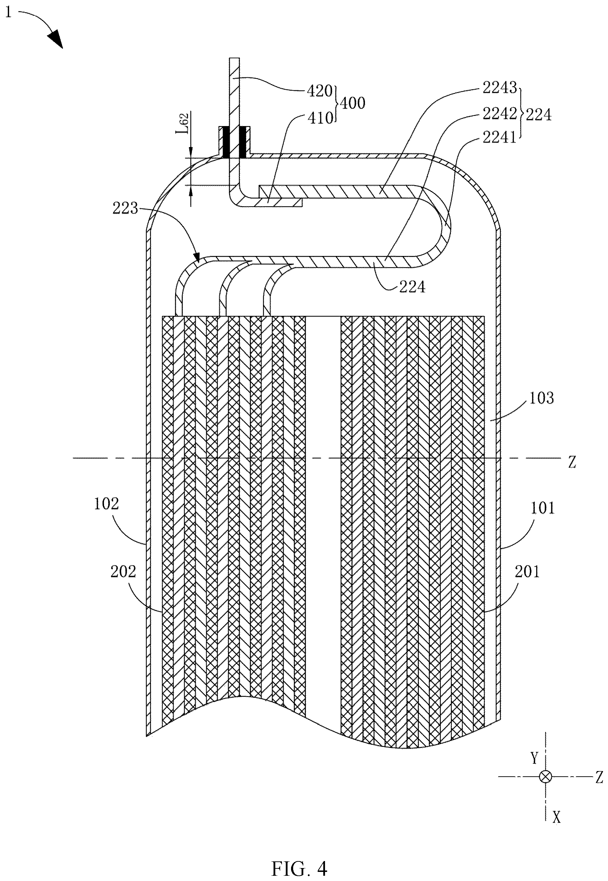

Referring to FIG. 1 to FIG. 4. FIG. 1 is a schematic diagram of an electrochemical apparatus 1 according to an embodiment of this application; FIG. 2 is a schematic cross-sectional diagram of the electrochemical apparatus 1 along line A-A; FIG. 3 is a schematic cross-sectional diagram of the electrochemical apparatus along line B-B; and FIG. 4 is a schematic cross-sectional diagram of the electrochemical apparatus along line C-C. The electrochemical apparatus 1 includes a housing 100, an electrode assembly 200, a first tab 300, and a second tab 400. The housing 100 is an installation support structure of the foregoing structures and also is a protective structure of the electrochemical apparatus 1. The electrode assembly 200 is accommodated in the housing 100, and includes a first electrode plate 210, a second electrode plate 220, and a separator 230 disposed between the first electrode plate 210 and the second electrode plate 220, where the first electrode plate 210, the second electrode plate 220, and the separator 230 are stacked and then wound. The first electrode plate 210 includes a first current collector 211. The second electrode plate 220 includes a second current collector 221 and a plurality of conducting strips 223 integrally arranged with the second current collector 221. All the conducting strips 223 protrude from the second current collector 221 along a first direction X shown in the figure, and all the conducting strips 223 are stacked in a thickness direction Z of the electrode assembly 200 shown in the figure to form a collecting portion 224, where the first direction X is perpendicular to the thickness direction Z. The first tab 300 includes a first portion 310, a second portion 320, and a third portion 330, where the first portion 310, the second portion 320, and the third portion 330 are connected in sequence, the first portion 310 is connected to the first electrode plate 210, the second portion 320 is located outside the first electrode plate 210 and disposed in a bent shape, and an end of the third portion 330 far away from the second portion 320 extends out of the housing 100. One end of the second tab 400 is connected to the collecting portion 224, and an other end of the second tab 400 extends out of the housing 100. "A plurality of" mentioned in this application means more than two. The following describes the housing 100, the electrode assembly 200, the first tab 300, and the second tab 400 in sequence.

For the housing 100, specifically referring to FIG. 1 and FIG. 2. The housing 100 as a whole appears like a flat box-like structure, and a thickness direction of the housing 100 is the same as the thickness direction Z of the electrode assembly 200. The housing 100 is provided with a third surface 101 and a fourth surface 102, where the third surface 101 and a fourth surface 102 are opposite to each other in the thickness direction thereof. The housing 100 is further provided with a first end portion 110 and a second end portion 120, where the first end portion 110 and the second end portion 120 are opposite to each other each other. The first end portion 110 is an end of the housing 100 from which the first tab 300 and the second tab 400 extend, and the second end portion 120 is an end of the housing 100 far away from the first tab 300; and a direction determined by pointing from one of the first end portion 110 and the second end portion 120 to the other is consistent with the first direction X. In addition, the housing 100 is further provided with an accommodating chamber 103 to accommodate the electrode assembly 200, part of the first tab 300, part of the conducting strip 223, and part of the second tab 400.

In this embodiment, the electrochemical apparatus 1 is a pouch battery; and the housing 100 is made of a flexible sheet material, for example, aluminum-plastic film. Specifically, referring to FIG. 3, FIG. 4, and with references to other accompanying drawings, the housing 100 includes a body portion 130 and a sealing portion 140 connected to the body portion 130. The body portion 130 is provided with the accommodating chamber 103. The electrode assembly 200 is accommodated in the accommodating chamber 103. The sealing portion 140 extends outward from a surface of the body portion 130 and is a region for sealing in a forming process of the housing 100; and the first tab 300 and the second tab 400 pass through the sealing portion 140 to extend out of the housing 100. A distance from a side of the sealing portion 140 close to the third surface 101 to the third surface 101 in the thickness direction Z is D₁₁, and a distance from a side of the sealing portion 140 close to the fourth surface 102 to the fourth surface 102 in the thickness direction Z is D₁₂, where D₁₁ > D₁₂. In this way, the accommodating chamber 103 includes a first accommodating space 1031 and a second accommodating space 1032, where the first accommodating space 1031 is located between the sealing portion 140 and the third surface 101 in the thickness direction Z, the second accommodating space 1032 is located between the sealing portion 140 and the fourth surface 102 in the thickness direction Z, and a size of the first accommodating space 1031 in the thickness direction Z is greater than a size of the second accommodating space 1032 in the thickness direction Z. It should be noted that, in other embodiments of this application, the electrochemical apparatus 1 may alternatively be a hard shell battery. Correspondingly, the housing 100 may be made of a hard material, for example, a polymer material or a metal material.

For the electrode assembly 200, specifically referring to FIG. 2 and with reference to other accompanying drawings. The electrode assembly 200 includes a first electrode plate 210, a second electrode plate 220, and a separator 230, where the first electrode plate 210, the second electrode plate 220, and the separator 230 are stacked. The first electrode plate 210 and the second electrode plate 220 have opposite polarities, and the separator 230 is disposed therebetween for separation. The first electrode plate 210, the second electrode plate 220, and the separator 230 are jointly wound and integrally present a cylindrical structure with a flat circular end face. The electrode assembly 200 is provided with a first surface 201 and a second surface 202, where the first surface 201 and the second surface 202 are opposite to each other in the thickness direction Z, the first surface 201 is disposed close to the third surface 101, and the second surface 202 is disposed close to the fourth surface 102. A thickness of the electrode assembly 200 in the thickness direction Z is L₁ mm. Persons skilled in the art may take a CT picture for the electrochemical apparatus 1 in the second direction Y; then may obtain a distance from the first surface 201 and the second surface 202 by using CT equipment, or may measure a distance from the first surface 201 and the second surface 202, namely L₁, by using an instrument. It should be noted that a comparison of dimensions related to this application shall be made after a reasonable measurement error has been eliminated.

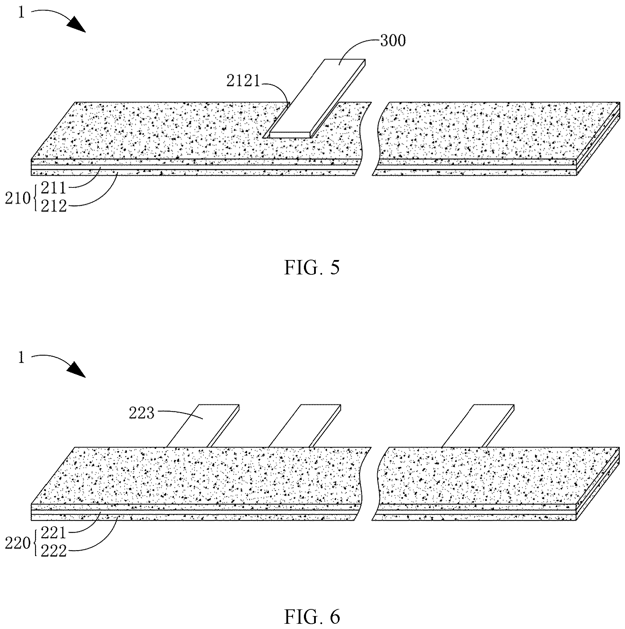

In this embodiment, the first electrode plate 210 is an anode electrode plate, and the second electrode plate 220 is a cathode electrode plate. Referring to FIG. 5. FIG. 5 is a schematic diagram of a connection between a first electrode plate 210 and a first tab 300 both in a flattened state, where the first electrode plate 210 includes the first current collector 211 and a first active material layer 212. The first current collector 211 is a substrate material layer for supporting the first active material layer 212, and also serves as a carrier for electron moving in the first electrode plate 210; and the first active material layer 212 is disposed on a surface of the first current collector 211, and serves as a carrier for intercalation and deintercalation of lithium ions. The first active material layer 212 is provided with a first concave portion 2121 to expose the first current collector 211; and the first tab 300 is connected to the first current collector 211 at the first concave portion 2121. Certainly, in other embodiments of this application, the first active material layer 212 may alternatively be provided with no first concave portion 2121. Correspondingly, the first current collector 211 is provided with a naked foil region with no first active material layer 212 provided at its end, and the first current collector 211 is connected to the first tab 300 through the naked foil region.

For material selection for the first current collector 211, in some embodiments, a material of the first current collector 211 includes copper, which is specifically a foil made of copper. It should be understood that, in other embodiments, the first current collector 211 may alternatively include another suitable conductive material. For example, in some embodiments, the first current collector 211 includes a copper alloy, nickel, or a nickel alloy. The first active material layer 212 includes an anode active material. For example, in some embodiments, the first active material layer 212 includes graphite, a conductive agent, and a binder. These materials are mixed, stirred to uniformity, and applied on a surface of the first current collector 211, such that the first active material layer 212 is obtained.

Referring to FIG. 6. FIG. 6 is a schematic diagram of the second electrode plate 220 in a flattened state. The second electrode plate 220 includes a second current collector 221, a second active material layer 222, and a plurality of conducting strips 223 protruding from the second current collector 221 in the first direction X. The second current collector 221 is a substrate material layer for supporting the second active material layer 222, and also serves as a carrier for electron moving in the second electrode plate 220; and the second active material layer 222 is provided on a surface of the second current collector 221, and serves as a carrier for intercalation and deintercalation of lithium ions.

For material selection for the second current collector 221, in some embodiments, a material of the second current collector 221 includes aluminum, which is specifically a foil made of aluminum. It should be understood that, in other embodiments, the second current collector 221 may alternatively include another suitable conductive material. For example, in some embodiments, the second current collector 221 includes aluminum alloy, nickel, or nickel alloy. The second active material layer 222 includes a cathode active material. For example, in some embodiments, the second active material layer 222 includes lithium iron phosphate particles, a dispersing agent, a binder, and a conductive agent. These materials are mixed, stirred to uniformity, and applied on a surface of the second current collector 221, such that the second active material layer 222 is obtained.

The conducting strip 223 is of a sheet structure and is connected to the second current collector 221. The conducting strips 223 are spaced from each other in a winding direction of the second electrode plate 220, thereby dividing the second electrode plate 220 into a plurality of regions staggered in the winding direction. Still referring to FIG. 4. The conducting strips 223 are connected to an end of the second current collector 221 and are sequentially arranged in the thickness direction Z, ends of the conducting strips 223 far away from the second electrode plate 220 are stacked, and stacked portions of the conducting strips 223 constitute the collecting portion 224. In this way, the conducting strips 223 connect these regions in parallel, which is beneficial to reduce overall internal resistance of the second electrode plate 220 and reduce heat dissipated by the second electrode plate 220.

In some embodiments, the conducting strips 223 are integrally formed with the second current collector 221. In other words, the conducting strips 223 are formed by extending outward from an edge of the second current collector 221. In a process of preparing the electrochemical apparatus 1, the second active material layer 222 is applied on a surface of the second current collector 221; a region of the second current collector 221 not applied with the second active material layer 222 is cut into a shape shown in FIG. 6; and the first electrode plate 210, the separator 230, the second electrode plate 220, and the separator 230 are stacked sequentially and wound, ensuring that the conducting strips 223 are roughly aligned in the thickness direction; and finally ends of the conducting strips 223 far away from the second electrode plate 220 are laminated and fixed by welding, such that the electrode assembly 200 shown in FIG. 2 and FIG. 4 is obtained.

In some embodiments, the entire collecting portion 224 is U-shaped, and the collecting portion 224 includes a first extension section 2241, a second extension section 2242, and a third extension section 2243, where the first extension section 2241, the second extension section 2242, and the third extension section 2243 are connected in sequence. Along an extension path of the collecting portion 224, the first extension section 2241 is part of the collecting portion 224 close to the second electrode plate 220, and the third extension section 2243 is part of the collecting portion 224 far away from the second electrode plate 220. In the first direction X, the first extension section 2241 and the third extension section 2243 are opposite to each other, and the first extension section 2241 is located between the electrode assembly 200 and the third extension section 2243. The second extension section 2242 is connected to the first extension section 2241 and the third extension section 2243 separately, such that the first extension section 2241, the second extension section 2242, and the third extension section 2243 jointly enclose a U-shaped structure. It should be understood that, even if the collecting portion 224 in this embodiment extends in a U-shaped manner, in other embodiments of this application, the collecting portion 224 may also extend in a straight line, an arc, or in any another shape, which is not specifically limited in this application.

For the first tab 300, still referring to FIG. 5 and FIG. 3, one end of the first tab 300 is connected to the electrode assembly 200, and an other end of the first tab 300 extends out of the housing 100 in the first direction X, such that a conductive terminal of the electrochemical apparatus 1 is constituted and configured to be connected to an external electricity load. The first tab 300 is of a sheet structure and extends in a bent shape as a whole, and the first tab 300 includes a first portion 310, a second portion 320, and a third portion 330, where the first portion 310, the second portion 320, and the third portion 330 are connected in sequence. The following describes the first portion 310, the second portion 320, and the third portion 330 in sequence with reference to FIG. 3.

The first portion 310 is connected to the first electrode plate 210, is flatshaped, and extends in the first direction X. The first portion 310 is located in the first concave portion 2121 and is fixed to the first current collector 211 by welding. Viewed from the second direction Y, a distance from an overlapping part of the first portion 310 and the first current collector 211 in the thickness direction Z to the first surface 201 is L₂ mm. Persons skilled in the art may take a CT picture for the electrochemical apparatus 1 in the second direction Y; then may obtain a distance from the part of the first portion 310 overlapping on a surface of the first current collector 211 to the first surface 201 by using CT equipment, or may measure a distance from the part of the first portion 310 overlapping on a surface of the first current collector 211 to the first surface 201, namely, L₂, by using an instrument. In this embodiment, in the first direction X, an end of the first portion 310 connecting to the second portion 320 is disposed beyond an edge of the first electrode plate 210, and a length of the first portion 310 beyond an edge of the second current collector 221 is L₅ mm. Persons skilled in the art may take a CT picture for the electrochemical apparatus 1 in the second direction Y; then may obtain a distance from an upper end of the first portion 310 to an upper edge of the second electrode plate 220, namely, L₅ as shown in FIG. 3, by using CT equipment or an instrument.

The second portion 320 is located outside the first electrode plate 210 and is disposed in a bent shape; and an end of the second portion 320 is connected to the first portion 310, and an other end of the second portion 320 is connected to the third portion 330. In this embodiment, the entire second portion 320 is U-shaped, and the second portion 320 includes a first connecting section 321, a second connecting section 322, and a bending section 323. One end of the first connecting section 321 is connected to the first portion 310 and an other end of the first connecting section 321 extends toward the first surface 201. An end of the bending section 323 is connected to an end of the first connecting section 321 facing toward the first surface 201, and the end of the bending section 323 bends toward a side of the first connecting section 321 far away from the electrode assembly 200. In the first direction X, the second connecting section 322 is located on a side of the first connecting section 321 far away from the electrode assembly 200, and the second connecting section 322 and the first connecting section 321 are opposite to each other in the first direction X. One end of the second connecting section 322 is connected to an end of the bending section 323 far away from the first connecting section 321, and an other end of the second connecting section 322 extends leaving away from the first surface 201. In other words, an end of the second connecting section 322 far away from the third portion 330 is indirectly connected to the first connecting section 321 through the bending section 323. In this way, the first connecting section 321, the bending section 323, and the second connecting section 322 jointly form a U-shaped structure. Viewed from the second direction Y, a distance from the second portion 320 to the first surface 201 in the thickness direction Z is L₃ mm. Specifically, L₃ refers to a minimum distance, viewed from the second direction Y, from the second portion 320 to the first surface 201 in the thickness direction Z. Persons skilled in the art may take a CT picture for the electrochemical apparatus 1 in the second direction Y, and may draw a tangent line P-P on a side of the second portion 320 close to the first surface 201, where the tangent line is parallel to the first surface 201; and then may measure a distance from the tangent line P-P to the first surface 201, namely distance L₃, by using an instrument.

It should be understood that in this embodiment, the second portion 320 includes the first connecting section 321, the bending section 323, and the second connecting section 322, all of which form a U-shaped structure. However, this application is not limited thereto, provided that the second portion 320 is in a bent shape. For example, in some other embodiments of this application, the second connecting section 322 of the second portion 320 is directly connected to the first connecting section 321, and in this case, the second portion 320 is a V-shaped structure. In other words, in some cases, the bending section 323 may be omitted. For another example, in some other embodiments of this application, the second portion 320 includes two V-shaped structures, where the two V-shaped structures are connected in sequence such that the second portion 320 is continuously bent.

The third portion 330 is flat shaped on the whole, one end of which is connected to an end of the second portion 320 far away from the first portion 310, and an other end of which extends out of the housing 100. A length of the third portion 330 extending in the first direction X in the accommodating chamber 103 is L₆₁ mm. Persons skilled in the art may take a CT picture for the electrochemical apparatus 1 in the second direction Y, and may obtain a distance from an upper corner of the second portion 320 to an inner surface of the housing 100, as shown in FIG. 3, by using CT equipment, or measure a distance from an upper corner of the second portion 320 to an inner surface of the housing 100, namely, distance L₆₁ as shown in FIG. 3, by using an instrument. When the first tab 300 is impacted, by means of elastic deformation of the second portion 320, at least part of impact force applied on the first tab 300 can be relieved such that impact force finally transferred to the first portion 310 and affecting a connection region between the first portion 310 and the first electrode plate 210 is reduced.

In some embodiments, to alleviate transitions among the first portion 310, the second portion 320, and the third portion 330 through sharp corners, which leads to stress concentration in a connection region of the three portions in the first tab 300, and affects mechanical performance of the first tab 300, a rounded corner is arranged at an end of the second portion 320 close to the first portion 310, and the rounded corner is connected to the first portion 310; and a rounded corner is arranged at an end of the second portion 320 close to the third portion 330, and the rounded corner is connected to the third portion 330.

In some embodiments, L₅ ≥ 0.2; such arrangement is designed to form a specified gap between the second portion 320 and an edge of the second electrode plate 220, so as to reduce the risk of the second portion 320 coming into contact with the second electrode plate 220 due to shaking and a risk of short circuit resulting therefrom to some extent. The following describes a relationship between distance L₅ and short circuit of electrochemical apparatus 1 with reference to experimental data.

Specifically, referring to Table 1. Table 1 is a comparison table of short-circuit test for electrochemical apparatuses 1 of different examples. The electrochemical apparatuses 1 of various examples were the same except for the distance L₅; and the test aims to obtain the relationship based on the test results by controlling the distance L₅ of the electrochemical apparatus 1.

A short-circuit test method of electrochemical apparatus includes the following steps:
S101: Open a small hole in the second end portion of the electrochemical apparatus 1 such that all the electrolyte in the housing 100 is completely poured out.
S102: Connect the first tab 300 and the second tab 400 of the electrochemical apparatus 1.
S103: Determine whether the electrochemical apparatus 1 passes the short circuit test. A resistance of the electrochemical apparatus 1 is measured when the first tab 300 is connected to the second tab 400. If the resistance is less than 1 mΩ, it indicates that there is a short circuit between the first electrode plate 210 and the second electrode plate 220, and the electrochemical apparatus 1 failed the short-circuit test, otherwise, the electrochemical apparatus 1 passes the short-circuit test.

In the examples, 1000 electrochemical apparatuses 1 were tested according to the method described above. The number of electrochemical apparatuses 1 that had passed the test was recorded, and the number of electrochemical apparatuses passed the test and the total number of tested electrochemical apparatuses were recorded in Table 1 in a fractional form. It can be learned from Examples 1 to 5 that when L₅ < 0.2, the electrochemical apparatus 1 has a specified risk of short circuit of the electrode assembly; and when L₅ ≥ 0.2, the preceding deficiencies may be better overcome.

**Table 1 Comparison table of short-circuit test for electrochemical apparatuses of different examples**

| Group | L₅ | Passed quantity/tested quantity of electrochemical apparatuses in short-circuit test |
|---|---|---|
| Example 1 | 0 | 980/1000 |
| Example 2 | 0.1 | 990/1000 |
| Example 3 | 0.2 | 1000/1000 |
| Example 4 | 0.3 | 1000/1000 |
| Example 5 | 0.6 | 1000/1000 |

In addition, in this embodiment, L₅ ≤ 2. Such arrangement with L₅ leads to an increase in an volume of the electrochemical apparatus 1, thus reducing energy density of the electrochemical apparatus 1 to some extent; and such arrangement with L₅ ≤ 2 is designed to ensure that there is a sufficient safe distance between the second portion 320 and the second electrode plate 220 and that the electrochemical apparatus 1 has high energy density. It should be noted that the "second direction" mentioned in this application is perpendicular to the thickness direction Z and the first direction X separately; in other words, the second direction Y, the first direction X, and the thickness direction Z are perpendicular to each other.

It should be noted that change of the distance L₂ causes a position where the first tab 300 is connected to the first electrode plate 210 to change accordingly in the winding direction (that is, the length direction of the first electrode plate 210 shown in FIG. 5), which further causes the internal resistance of the first electrode plate 210 to be different; and correspondingly, heat dissipated by the first electrode plate 210 and temperature rise of the entire electrochemical device 1 also change.

Referring to Table 2. Table 2 is a comparison table of temperature rise test for electrochemical apparatuses 1 of various examples. The electrochemical apparatuses 1 of various examples were the same except for the parameter distance L₂. This test aims to control change of L₂, so as to control change of L₂/L₁, in other words, control change of a position of the first electrode plate 300 with respect to the first electrode plate 210 in the winding direction; and determine influence of the parameter L₂/L₁ on the temperature rise of the electrochemical device 1 according to temperature rise in different examples. The temperature rise test includes the following steps:
S201: Place the electrochemical apparatus 1 at a temperature of 25°C±2°C and charge the electrochemical apparatus 1 to 100% state of charge (State of Charge, SOC).
S202: Leave the electrochemical apparatus 1 standing for 120 minutes to make a temperature of the electrochemical apparatus 1 the same as an ambient temperature.
S203: Record the ambient temperature T₁.
S204: Attach a temperature sensor to a central region of the third surface 101 of the housing 100.
S205: Discharge the electrochemical apparatus 1 to 0% SOC at a current of 2I, where 1I means current intensity of the electrochemical apparatus 1 when the electrochemical apparatus 1 in a fully charged state, that is, in a 100% SOC state, is discharged to 0% SOC at 25°C at a constant current for 1 hour. For example, under the condition that a capacity of the electrochemical apparatus 1 is 45 Ah, 1I is 45 A.
S206: Record a maximum temperature T₂ measured by using the temperature sensor.
S207: Calculate temperature rise ΔT of the electrochemical apparatus 1, where ΔT = T₂-T₁.

In this application, the electrochemical apparatus 1 satisfies 0.6 ≤ L₂/L₁ ≤ 0.9. Specifically, referring to Table 2. It can be learned with reference to Examples 6 to 12 that when L₂/L₁ < 0.6 or L₂/L₁ > 0.9, the temperature rise of the electrochemical apparatus 1 is greater than 25°C; conversely, when 0.6 ≤ L₂/L₁ ≤ 0.9, the temperature rise of the electrochemical apparatus 1 is less than 25°C. When L₂/L₁ = 0.75, in the winding direction of the first electrode plate 210 (namely, a length direction of the first electrode plate), the first tab 300 is approximately located at a relatively central position of the first electrode plate 210, where internal resistance of the first electrode plate 210 is small, and accordingly, the temperature rise of the electrochemical apparatus 1 is low. It should be understood that when 0.1 ≤ L₂/L₁ ≤ 0.4, the electrochemical apparatus 1 still has a small temperature rise. However, in this case, the second portion 320 has a short bending toward the first surface 201 with respect to the first portion 310, which is not conducive to providing sufficient elasticity to relieve sufficient impact force when the electrochemical apparatus 1 is impacted. However, such arrangement with L₂/L₁ ≥ 0.5 is beneficial for the electrochemical apparatus 1 to overcome these shortcomings. In conclusion, setting of 0.6 ≤ L₂/L₁ ≤ 0.9 can ensure sufficient elasticity of the second portion 320 of the first tab 300 and realize low temperature rise of the electrochemical apparatus 1.

**Table 2 Comparison table of temperature rise for electrochemical apparatuses 1 of different examples**

| Group | L₂ | L₁ | L₂/L₁ | Temperature rise of electrochemical apparatus (°C) |
|---|---|---|---|---|
| Example 6 | 7.8 | 15.6 | 0.5 | 37°C |
| Example 7 | 9.0 | 15.6 | 0.58 | 30°C |
| Example 8 | 9.36 | 15.6 | 0.6 | 24°C |
| Example 9 | 11.7 | 15.6 | 0.75 | 20°C |
| Example 10 | 14.04 | 15.6 | 0.9 | 23°C |
| Example 11 | 14.4 | 15.6 | 0.92 | 29°C |
| Example 12 | 15.5 | 15.6 | 0.99 | 35°C |

It should be noted that a distance (L₂-L₃) from a side of the second portion 320 close to the first surface 201 to the first portion 310 in the thickness direction Z affects anti-drop performance and vibration resistance of the electrochemical apparatus 1. Specifically, the distance being too short results in a weak effect of relieving the impact force exerted on the second portion 320; correspondingly, the impact on the first tab 300 is still mostly transmitted to the first portion 310 and the first electrode plate 210. This may cause damage to the joint between the first tab 300 and the first electrode plate 210, or pierce the separator 230 to cause a short circuit of the electrode assembly 200. As a result, the electrochemical apparatus 1 has poor anti-drop performance. If the distance is too long, when the electrochemical apparatus 1 vibrates due to transportation, operation, and other factors, the second portion 320 may squeeze the housing 100 or even penetrate the housing 100, resulting in electrolyte leakage.

Referring to Table 3. Table 3 is a comparison table of vibration test and drop test for electrochemical apparatuses 1 of various examples. The electrochemical apparatuses 1 of various examples were the same except for the distance L₃. This test aims to control change of L₃, and realize change of (L₂-L₃)/L₂, so as to determine influence of (L₂-L₃)/L₂ on the anti-drop performance and vibration resistance of the electrochemical apparatus 1 according to vibration test and drop test conditions in different examples.

The drop test includes the following steps:
S301: Place the electrochemical apparatus 1 at a temperature of 25°C±2°C and charge the electrochemical apparatus to 100% SOC.
S302: Perform drop test for the electrochemical apparatus by using a drop test instrument special for electrochemical apparatuses. Specifically, first, a mechanical arm of the test instrument was controlled to grab a sample of the electrochemical apparatus 1 and lift 1.8 m away from a marble slab, and the thickness direction Z of the electrochemical apparatus 1 was controlled to be perpendicular to the marble slab and the electrochemical apparatus 1 was released; then a mechanical appliance was controlled to grab a sample of the electrochemical apparatus 1 and lift 1.8 m away from the marble slab, and the first tab 300 was controlled to face upward and the electrochemical apparatus 1 is released; after that, the mechanical appliance was controlled to grab a sample of the electrochemical apparatus and lift 1.8 m away from the marble slab, and the second direction Y of the electrode assembly 200 was controlled to be perpendicular to the marble slab and the electrochemical apparatus was released.
S303: Determine whether the electrochemical apparatus passes the test. Specifically, it is observed whether the surface of the housing of the electrochemical apparatus is damaged, whether a fire or explosion occurs; if so, the electrochemical apparatus failed the test; on the contrary, the electrochemical apparatus passed the test.

The vibration test includes the following steps:
S401: Place the electrochemical apparatus 1 at a temperature of 25°C±2°C and charge the electrochemical apparatus 1 to 100% SOC.
S402: Perform vibration test for the electrochemical apparatus by using an electrochemical apparatus vibration test instrument. The vibration test is performed in the first direction X, the second direction Y, and the thickness direction Z separately, with each direction in a sweep cycle between 10 Hz and 55 Hz and a test duration of 90 min±5 min. The vibration test equipment shall meet requirements of GB/T36972-2018. The amplitude of the vibration test is 0.76 mm, the maximum stroke is 1.52 mm, and the vibration frequency changes at a rate of 1 Hz/min between 10 Hz and 55 Hz.
S403: Determine whether the electrochemical apparatus passes the test. Specifically, the tested electrochemical apparatus was left standing for 1h, and an opening in the housing 100 of the electrochemical apparatus 1 was cut in a dry environment; then it was observed whether the interior of the housing 100 of the electrochemical apparatus 1 was damaged or whether the housing 100 leaked; and if so, the electrochemical apparatus 1 failed the test; on the contrary, the electrochemical apparatus 1 passed the test.

It can be learned from Examples 13 to 17 that when (L₂-L₃)/L₂ < 0.75, or (L₂₋L₃)/L₂ > 1, a pass rate of the drop test does not reach 10/10, and when 0.75 ≤ (L₂₋L₃)/L₂ ≤ 1, a pass rate of the drop test is 10/10, indicating that these electrochemical apparatuses 1 have excellent anti-drop performance.

In addition, it can be learned from Examples 13 to 17 that when (L₂-L₃)/L₂ > 1, a pass rate of the electrochemical apparatus 1 is low; on the contrary, when (L₂-L₃)/L₂ ≤ 1, a pass rate of the drop test of the electrochemical apparatus 1 is close to or even can reach 10/10.

It can be learned from test results of the drop test and the vibration test that when 0.75 ≤ (L₂-L₃)/L₂ ≤ 1, the electrochemical apparatuses 1 have both excellent anti-drop performance and vibration resistance.

**Table 3 Comparison table of vibration test and drop test for electrochemical apparatuses of various examples**

| Group | L₃ | L₂ | (L₂-L₃)/L₂ | Passed quantity/tested quantity in drop test | Passed quantity/tested quantity in vibration test |
|---|---|---|---|---|---|
| Example 13 | 7.5 | 11.7 | 0.64 | 8/10 | 10/10 |
| Example 14 | 8.78 | 11.7 | 0.75 | 10/10 | 10/10 |
| Example 15 | 11.25 | 11.7 | 0.96 | 10/10 | 10/10 |
| Example 16 | 11.7 | 11.7 | 1.00 | 10/10 | 9/10 |
| Example 17 | 12.75 | 11.7 | 1.09 | 9/10 | 6/10 |

In some embodiments, the electrochemical apparatus 1 satisfies L₄₁/L₄₂ ≤ 1.1; where viewed in the second direction Y, a distance from an end of the third portion 320 close to the second portion 320 and on a side facing away from the first surface 201 to the first surface 201 in the thickness direction Z is L₄₁ mm, and a distance from a side of the first portion 310 facing away from the first surface 201 to the first surface 201 in the thickness direction Z is L₄₂ mm. Persons skilled in the art may take a CT picture for the electrochemical apparatus 1 in the second direction Y; then may obtain a distance from the left side of the lower end of the third portion 330 to the first surface 201, namely L₄₁ as shown in FIG. 3, by using CT equipment or an instrument; and persons skilled in the art may take a CT picture for the electrochemical apparatus 1 in the second direction Y, and may measure a distance from the left side of the first portion 310 to the first surface 201, namely distance L₄₂ as shown in FIG. 3, by using CT equipment or an instrument.

When the first tab 300 is subjected to an external force in the first direction X shown in the figure, or has a component force in the first direction X, the second connecting section 322 bends toward the electrode assembly 200. Under the condition that, in the thickness direction Z, an end of the second connecting section 322 facing away from the first surface 201 goes significantly beyond an end of the first connecting section 321 facing away from the first surface 201, the end of the second connecting section 322 facing away from the first surface 201 may be inserted inversely to touch the second electrode plate 220 in the electrode assembly 200, causing short circuit to the electrochemical apparatus 1. Such arrangement with L₄/L₂ ≤ 1.1 is designed to control the end of the second connecting section 322 facing away from the first surface 201 not to go beyond the end of the first connecting section 321 facing away from the first surface 201, or to go slightly beyond the end of the first connecting section 321 facing away from the first surface 201, so as to reduce the risk of short circuit.

In addition, to reduce a risk of short circuit caused by inverse insertion of the second connecting section 322, in some embodiments, the electrochemical apparatus 1 further includes insulating glue. Specifically, the insulating glue is disposed on a surface of the second connecting section 322 facing toward the electrode assembly 200; and the insulating glue is used to prevent the second connecting section 322 from coming into contact with the second electrode plate 220 when the second connecting section 322 is bending toward the electrode assembly 200, thereby reducing the preceding hidden dangers.

For the second tab 400, specifically referring to FIG. 4 and other accompanying drawings. One end of the second tab 400 is connected to the collecting portion 224, and an other end of the second tab 400 passes through the first end portion 110 and extends out of the housing 100, to constitute another conductive terminal of the electrochemical apparatus 1 for being connected to an external electricity load. In this embodiment, the second tab 400 includes a fourth portion 410 and a fifth portion 420. The fourth portion 410 is stacked on the third extension section 2243. The fourth portion 420 is disposed in a bent way with respect to the fourth portion 410 and extends linearly; and one end of the fifth portion 420 is connected to the fourth portion 410, and an other end of the fifth portion 420 extends out of the housing 100 in the first direction X. A length of the fifth portion 420 extending in the accommodating chamber 103 in the first direction X is L₆₂, that is, a length of the second tab 400 extending in the accommodating chamber 103 in the first direction X. Persons skilled in the art may take a CT picture for the electrochemical apparatus 1 in the second direction Y, and may directly obtain a distance from an upper corner of the fourth portion 410 to an inner surface of the housing 100, as shown in FIG. 4, by using CT equipment, or measure a distance from an upper corner of the fourth portion 410 to an inner surface of the housing 100, namely, distance L₆₂ as shown in FIG. 4, by using an instrument.

Optionally, a cross-sectional area of the first tab 300 perpendicular to an extension path thereof is s₁ mm², and a cross-sectional area of the second tab 400 perpendicular to an extension path thereof is s₂ mm², where the first tab 300 and the second tab 400 satisfy s₁ > s₂. Tunneling of electrons in or out of the first electrode plate 210 is realized by using the first tab 300, while tunneling of electrons in or out of the second electrode plate 220 is realized by using the plurality of conducting strips 223 and the second tab 400. Compared with the entirety composed of all the conducting strips 223 and the second tab 400, the first tab 300 is more difficult to dissipate heat. Such arrangement with s₁ > s₂ is designed to increase a surface area of the first tab 300, thereby increasing a heat dissipation rate of the first tab 300, such that the first tab 300 and the second tab 400 dissipate heat in a more uniform manner.

In some embodiments, the electrochemical apparatus satisfies |L₆₁-L₆₂| ≤ 1. Specifically, when the sealing portion 140 is impacted, an impact force is transferred toward the first tab 300 and the second tab 400; under the condition that there is a large difference between L₆₁ and L₆₂, one of the tabs is subjected to concentrated force, in other words, forces on the two tabs are uneven, which reduces anti-drop performance of the electrochemical apparatus 1. The following describes an influence of the difference between the distance L₆₁ and the distance L₆₂ on anti-drop performance of the electrochemical apparatus 1 with reference to test data.

Referring to Table 4. Table 4 is a comparison table of drop test for electrochemical apparatuses 1 of various examples. The electrochemical apparatuses 1 of various examples were the same except for a distance from the sealing portion 140 to the second portion 320 of the first tab 300 and/or a distance from the sealing portion 140 to the fourth portion 410 of the second tab 400, that is, the distance L₆₁ and/or distance L₆₂. This test aims to control changes of L₆₁ and/or L₆₂, and control change of |L₆₁-L₆₂|, so as to determine influence of |L₆₁-L₆₂| on the anti-drop performance the electrochemical apparatus 1 according to vibration cases in different examples. For the temperature rise test, referring to the steps S301 to S303, which will not be repeated herein.

With reference to Examples 18 to 22, when |L₆₁-L₆₂| > 1, a pass rate of the drop test cannot reach 10/10; correspondingly, when |L₆₁-L₆₂| ≤ 1, a pass rate of the drop test can reach 10/10, indicating that the electrochemical apparatus 1 has excellent anti-drop performance. With reference to Examples 20, 23, and 24, the electrochemical apparatuses 1 of various examples satisfy |L₆₁-L₆₂| = 0, except for L₆₁ (or a specific value of L₆₂). It can be learned that even though both L₆₁ and L₆₂ change, as long as an absolute value of the difference therebetween is constant, there is no obvious difference in the anti-drop performance of the electrochemical apparatuses 1.

**Table 4 Comparison table of drop test for electrochemical apparatuses of different examples**

| Group | L₆₁ | L₆₂ | \|L₆₁-L₆₂\| | Passed quantity/tested quantity in drop test |
|---|---|---|---|---|
| Example 18 | 2 | 0.5 | 1.5 | 9/10 |
| Example 19 | 2 | 1 | 1 | 10/10 |
| Example 20 | 2 | 2 | 0 | 10/10 |
| Example 21 | 2 | 3 | 1 | 10/10 |
| Example 22 | 2 | 4 | 2 | 7/10 |
| Example 23 | 3 | 3 | 0 | 10/10 |
| Example 24 | 1 | 1 | 0 | 10/10 |

To sum up, the electrochemical apparatus 1 according to some embodiments of this application includes a housing 100, an electrode assembly 200, a first tab 300, and a second tab 400. The first tab 300 includes: a first portion 310 connected to a first electrode plate 210, a second portion 320 located outside the first electrode plate 210 and disposed in a bent shape, and a third portion 330, at least part of which extends out of the housing 100. Tunneling of electrons in or out of the first electrode plate 210 is realized by using the first tab 300, while Tunneling of electrons in or out of the second electrode plate 220 is realized by using the plurality of conducting strips 223 thereon.

As the first tab 300 includes the second portion 320 disposed in a bent way, in a case that the first tab 300 is impacted, the first tab 300 can relieve part of impact force through deformation of the second portion 320, such that impact force finally reaching a joint between the first tab 300 and the first electrode plate 210 is reduced to some extent. Therefore, the electrochemical apparatus according to some embodiments of this application can alleviate the problem that the first tab 300 directly connected to the first electrode plate 210 is prone to damage at a joint between the first tab 300 and the first electrode plate 210 caused by external impact.

In addition, the arrangement of the conducting strips 223 and the second tab 400 allows the housing 100 have a space not filled by the electrode assembly 200 in the first end portion 110; and the second portion 320 disposed in a bent way in the first tab 300 and the conducting strips 223 disposed in a bent way can support the housing 100 in the thickness direction Z to some extent. This reduces a disadvantage that the first end portion 110 of the housing 100 is not suitable for an expected installation environment due to excessive deformation and collapse caused by extrusion.

It should be noted that the foregoing embodiments are described by using an example of the first tab 300 and the second tab 400 both being located on the same end of the electrode assembly 200, that is, both being close to the first end portion 110. However, in other embodiments of this application, the first tab 300 and the second tab 400 are also located on different ends of the electrode assembly 200.

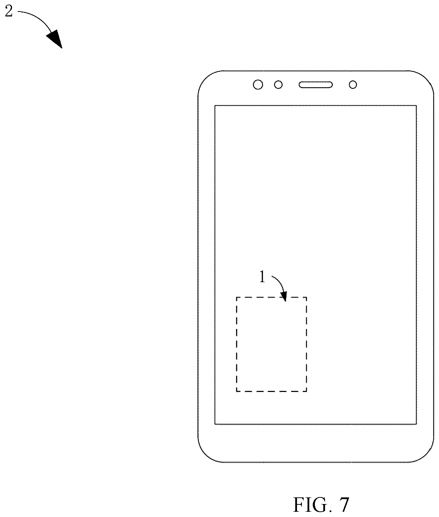

Based on the same inventive concept, this application further provides an electric apparatus. Referring to FIG. 7. FIG. 7 is a schematic diagram of an electronic apparatus 2 according to an embodiment of this application. The electronic apparatus includes the electrochemical apparatus 1 according to any one of the foregoing embodiments and a load structure powered by the electrochemical apparatus 1. In this embodiment, the electronic apparatus 2 includes a mobile phone. It can be understood that, in other embodiments of this application, the electronic apparatus may alternatively be a tablet computer, a computer, a drone, and other apparatus driven by electricity.

In conclusion, it should be noted that the foregoing embodiments are merely intended to describe the technical solutions of this application, but not to limit this application. Under the concept of this application, the technical features in the foregoing embodiments or different embodiments can also be combined, the steps can be implemented in any order, and there are also many other variations in different aspects of this application as described above, which are not provided in detail for the sake of brevity. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. An electrochemical apparatus (1), comprising:
a housing (100);
an electrode assembly (200) accommodated in the housing (100) and comprising a first electrode plate (210), a second electrode plate (220), and a separator disposed between the first electrode plate (210) and the second electrode plate (220); wherein the first electrode plate (210), the second electrode plate (220), and the separator (230) are stacked and then wound; the first electrode plate (210) comprises a first current collector (211), the second electrode plate (220) comprises a second current collector (221) and a plurality of conducting strips (223) integrally arranged with the second current collector (221), the plurality of conducting strips (223) protrude from the second current collector (221) along a first direction (X), the plurality of conducting strips (223) are stacked in a thickness direction of the electrode assembly (200) to form a collecting portion (224), and the first direction (X) is perpendicular to the thickness direction (Z);
a first tab (300) directly connected to the first electrode plate (210) and made of a sheet structure extending in a bent shape as a whole, the first tab (300) comprising a first portion (310), a second portion (320), and a third portion (330); wherein the first portion (310), the second portion (320), and the third portion (330) are connected in sequence, the first portion (310) is connected to the first current collector (211), the second portion (320) is located outside the first current collector (211) and disposed in a bent shape, and the third portion (330) extends out of the housing (100); and
a second tab (400) connected to the collecting portion (224) and extending out of the housing (100).

2. The electrochemical apparatus (1) according to claim 1, **characterized in that**, the electrode assembly (200) has a first surface (201) and a second surface (202), the first surface (201) and the second surface (202) are opposite to each other in the thickness direction (Z); and
the second portion (320) comprises a first connecting section (321) and a second connecting section (322);
one end of the first connecting section (321) is connected to the first portion (310) and an other end of the first connecting section (321) extends toward the first surface (201); and
the second connecting section (322) is located on a side of the first connecting section (321), wherein one end of the second connecting section (322) is connected to an end of the first connecting section (321), and an other end of the second connecting section (322) is connected to an end of the third portion (330).

3. The electrochemical apparatus (1) according to claim 2, **characterized in that**, the second portion (320) further comprises a bending section (323); one end of the bending section (323) is connected to an end of the first connecting section (321) facing toward the first surface (201), and an other end of the bending section (323) connected to an end of the second connecting section (322) facing toward the first surface (201).

4. The electrochemical apparatus (1) according to claim 2 or 3, **characterized in that**, a thickness of the electrode assembly (200) in the thickness direction (Z) is L₁ mm;
in a second direction (Y), a distance from an overlapping part of the first portion (310) and the first current collector (211) in the thickness direction (Z) to the first surface (201) is L₂ mm, 0.6 ≤ L₂/L₁ ≤ 0.9; and
the second direction (Y) is perpendicular to the first direction (X) and the thickness direction (Z).

5. The electrochemical apparatus (1) according to claim 2 or 3, **characterized in that**, a distance from an overlapping part of the first portion (310) and the first current collector (211) in the thickness direction (Z) to the first surface (201) is L₂ mm;
in a second direction (Y), in the thickness direction (Z), a distance from the second portion (320) to the first surface (201) is L₃ mm, 0.75 ≤ (L₂-L₃)/L₂ ≤ 1; and
the second direction (Y) is perpendicular to the first direction (X) and the thickness direction (Z).

6. The electrochemical apparatus (1) according to claim 2 or 3, **characterized in that**, a distance from the end of the third portion (330) to the first surface (201) in the thickness direction (Z) is L₄₁ mm, and in a second direction (Y), a distance from a side of the first portion (310) facing away from the first surface (201) to the first surface (201) is L₄₂ mm, L₄₁/L₄₂ ≤ 1.1, and
the second direction (Y) is perpendicular to the first direction (X) and the thickness direction (Z).

7. The electrochemical apparatus (1) according to any one of claims 1 to 6, **characterized in that**, a length of the first portion (310) beyond an edge of the second current collector (221) is L₅ mm; and 0.2 ≤ L₅ ≤ 2.

8. The electrochemical apparatus (1) according to any one of claims 1 to 6, **characterized in that**, the housing (100) comprises a body portion (130) and a sealing portion (140) connected to the body portion (130), the body portion (130) is provided with an accommodating chamber (103), the electrode assembly (200) is accommodated in the accommodating chamber (103); the first tab (300) and the second tab (400) pass through the sealing portion (140) to extend out of the housing (100); and
a length of the third portion (330) extending in the first direction (X) in the accommodating chamber (103) is L₆₁, and a length of the second tab (400) extending in the first direction (X) in the accommodating chamber (103) is L₆₂, and |L₆₁-L₆₂| ≤ 1mm.

9. The electrochemical apparatus (1) according to any one of claims 1 to 8, **characterized in that**, the first tab (300) is welded to the first current collector (211).

10. The electrochemical apparatus (1) according to any one of claims 1 to 9, **characterized in that**, the first electrode plate (210) is an anode electrode plate, and the second electrode plate (220) is a cathode electrode plate; and
a material of the first tab (300) comprises copper, a copper alloy, nickel, or a nickel alloy; and a material of the second tab (400) comprises aluminum or an aluminum alloy.

11. The electrochemical apparatus (1) according to any one of claims 1 to 10, **characterized in that**, a cross-section area of the first tab (300) perpendicular to an extension path thereof is s₁ mm², a cross-section area of the second tab (400) perpendicular to an extension path thereof is s₂ mm², and s₁ > s₂.

12. The electrochemical apparatus (1) according to any one of claims 2 to 11, **characterized in that**, the housing (100) comprises a body portion (130) and a sealing portion (140) connected to the body portion (130), the body portion (130) is provided with an accommodating chamber (103), the electrode assembly (200) is accommodated in the accommodating chamber (103), and the first tab (300) passes through the sealing portion (140) to extend out of the housing (100);
the housing (100) is provided with a third surface (101) and a fourth surface (102), wherein the first surface (201) and the second surface (202) are opposite to each other in the thickness direction (Z); and
in the thickness direction (Z), the third surface (101), the first surface (201), the second surface (202), and the fourth surface (102) are sequentially arranged; and in the thickness direction (Z), a distance (D₁₁) from a side of the sealing portion (140) facing the third surface (101) to the third surface (101) is greater than a distance (D₁₂) from a side of the sealing portion (140) facing the fourth surface (102) to the fourth surface (102).

13. The electrochemical apparatus (1) according to any one of claims 1 to 12, **characterized in that**, the first electrode plate (210) further comprises a first active material layer (212) disposed on the first current collector (211), a first concave portion (2121) is disposed on the first active material layer (212), the first concave portion (2121) exposes the first current collector (211), and the first tab (300) is disposed at the first concave portion (2121) and connected to the first current collector (211).

14. An electronic apparatus (1), comprising the electrochemical apparatus (1) according to any one of claims 1 to 13.

## Patentansprüche

1. Elektrochemische Einrichtung (1), umfassend:
ein Gehäuse (100);
eine Elektrodenbaugruppe (200), die in dem Gehäuse (100) aufgenommen ist und eine erste Elektrodenplatte (210), eine zweite Elektrodenplatte (220) und einen Separator umfasst, der zwischen der ersten Elektrodenplatte (210) und der zweiten Elektrodenplatte (220) angeordnet ist; wobei die erste Elektrodenplatte (210), die zweite Elektrodenplatte (220) und der Separator (230) gestapelt und dann gewickelt sind; die erste Elektrodenplatte (210) einen ersten Stromabnehmer (211) umfasst, die zweite Elektrodenplatte (220) einen zweiten Stromabnehmer (221) und eine Vielzahl von leitenden Streifen (223) umfasst, die einstückig mit dem zweiten Stromabnehmer (221) angeordnet sind, die Vielzahl von leitenden Streifen (223) entlang einer ersten Richtung (X) vom zweiten Stromabnehmer (221) vorspringen, die Vielzahl von leitenden Streifen (223) in einer Dickenrichtung der Elektrodenbaugruppe (200) so gestapelt sind, dass sie einen Abnahmeabschnitt (224) bilden, und die erste Richtung (X) senkrecht zur Dickenrichtung (Z) verläuft;
eine erste Lasche (300), die direkt mit der ersten Elektrodenplatte (210) verbunden ist und aus einer Blechstruktur besteht, die sich in einer gebogenen Form als Ganzes erstreckt, wobei die erste Lasche (300) einen ersten Abschnitt (310), einen zweiten Abschnitt (320) und einen dritten Abschnitt (330) umfasst; wobei der erste Abschnitt (310), der zweite Abschnitt (320) und der dritte Abschnitt (330) der Reihe nach verbunden sind, der erste Abschnitt (310) mit dem ersten Stromabnehmer (211) verbunden ist, der zweite Abschnitt (320) sich außerhalb des ersten Stromabnehmers (211) befindet und in einer gebogenen Form angeordnet ist, und der dritte Abschnitt (330) sich aus dem Gehäuse (100) erstreckt; und
eine zweite Lasche (400), die mit dem Abnahmeabschnitt (224) verbunden ist und sich aus dem Gehäuse (100) erstreckt.

2. Elektrochemische Einrichtung (1) nach Anspruch 1, **dadurch gekennzeichnet, dass** die Elektrodenbaugruppe (200) eine erste Oberfläche (201) und eine zweite Oberfläche (202) aufweist, die erste Oberfläche (201) und die zweite Oberfläche (202) einander in der Dickenrichtung (Z) gegenüberliegen; und
der zweite Abschnitt (320) ein erstes Verbindungsteilstück (321) und ein zweites Verbindungsteilstück (322) umfasst;
ein Ende des ersten Verbindungsteilstücks (321) mit dem ersten Abschnitt (310) verbunden ist und ein anderes Ende des ersten Verbindungsteilstücks (321) sich zur ersten Oberfläche (201) hin erstreckt; und
das zweite Verbindungsteilstück (322) sich auf einer Seite des ersten Verbindungsteilstücks (321) befindet, wobei ein Ende des zweiten Verbindungsteilstücks (322) mit einem Ende des ersten Verbindungsteilstücks (321) verbunden ist, und ein anderes Ende des zweiten Verbindungsteilstücks (322) mit einem Ende des dritten Abschnitts (330) verbunden ist.

3. Elektrochemische Einrichtung (1) nach Anspruch 2, **dadurch gekennzeichnet, dass** der zweite Abschnitt (320) weiter ein Biegeteilstück (323) umfasst; ein Ende des Biegeteilstücks (323) mit einem Ende des ersten Verbindungsteilstücks (321) verbunden ist, das der ersten Oberfläche (201) zugewandt ist, und ein anderes Ende des Biegeteilstücks (323) mit einem Ende des zweiten Verbindungsteilstücks (322) verbunden ist, das der ersten Oberfläche (201) zugewandt ist.

4. Elektrochemische Einrichtung (1) nach Anspruch 2 oder 3, **dadurch gekennzeichnet, dass** eine Dicke der Elektrodenbaugruppe (200) in der Dickenrichtung (Z) L₁ mm beträgt;
in einer zweiten Richtung (Y) ein Abstand von einem überlappenden Teil des ersten Abschnitts (310) und des ersten Stromabnehmers (211) in der Dickenrichtung (Z) zur ersten Oberfläche (201) L₂ mm beträgt, 0,6 ≤ L₂/L₁ ≤ 0,9; und
die zweite Richtung (Y) zur ersten Richtung (X) und der Dickenrichtung (Z) senkrecht verläuft.

5. Elektrochemische Einrichtung (1) nach Anspruch 2 oder 3, **dadurch gekennzeichnet, dass** ein Abstand von einem überlappenden Teil des ersten Abschnitts (310) und des ersten Stromabnehmers (211) in der Dickenrichtung (Z) zur ersten Oberfläche (201) L₂ mm beträgt;
in einer zweiten Richtung (Y), in der Dickenrichtung (Z), ein Abstand vom zweiten Abschnitt (320) zur ersten Oberfläche (201) L₃ mm beträgt, 0,75 ≤ (L₂-L₃)/L₂ ≤ 1; und die zweite Richtung (Y) zur ersten Richtung (X) und der Dickenrichtung (Z) senkrecht verläuft.

6. Elektrochemische Einrichtung (1) nach Anspruch 2 oder 3, **dadurch gekennzeichnet, dass** ein Abstand vom Ende des dritten Abschnitts (330) zur ersten Oberfläche (201) in der Dickenrichtung (Z) L₄₁ mm beträgt, und in einer zweiten Richtung (Y) ein Abstand von einer Seite des ersten Abschnitts (310), die von der ersten Oberfläche (201) abgewandt ist, zur ersten Oberfläche (201) L₄₂ mm beträgt, L₄₁/L₄₂ ≤ 1,1, und die zweite Richtung (Y) zur ersten Richtung (X) und der Dickenrichtung (Z) senkrecht verläuft.

7. Elektrochemische Einrichtung (1) nach einem der Ansprüche 1 bis 6, **dadurch gekennzeichnet, dass** eine Länge des ersten Abschnitts (310) über eine Kante des zweiten Stromabnehmers (221) hinaus L₅ mm beträgt; und 0,2 ≤ L₅ ≤ 2.

8. Elektrochemische Einrichtung (1) nach einem der Ansprüche 1 bis 6, **dadurch gekennzeichnet, dass** das Gehäuse (100) einen Körperabschnitt (130) und einen mit dem Körperabschnitt (130) verbundenen Dichtungsabschnitt (140) umfasst, der Körperabschnitt (130) mit einer Aufnahmekammer (103) versehen ist, die Elektrodenbaugruppe (200) in der Aufnahmekammer (103) aufgenommen ist; die erste Lasche (300) und die zweite Lasche (400) durch den Dichtungsabschnitt (140) treten, um sich aus dem Gehäuse (100) heraus zu erstrecken; und
eine Länge des dritten Abschnitts (330), der sich in der ersten Richtung (X) in der Aufnahmekammer (103) erstreckt, L₆₁ beträgt, und eine Länge der zweiten Lasche (400), die sich in der ersten Richtung (X) in der Aufnahmekammer (103) erstreckt, L₆₂ beträgt, und |L₆₁-L₆₂| ≤ 1 mm.

9. Elektrochemische Einrichtung (1) nach einem der Ansprüche 1 bis 8, **dadurch gekennzeichnet, dass** die erste Lasche (300) an den ersten Stromabnehmer (211) geschweißt ist.

10. Elektrochemische Einrichtung (1) nach einem der Ansprüche 1 bis 9, **dadurch gekennzeichnet, dass** die erste Elektrodenplatte (210) eine Anodenelektrodenplatte ist und die zweite Elektrodenplatte (220) eine Kathodenelektrodenplatte ist; und
ein Material der ersten Lasche (300) Kupfer, eine Kupferlegierung, Nickel oder eine Nickellegierung umfasst; und ein Material der zweiten Lasche (400) Aluminium oder eine Aluminiumlegierung umfasst.

11. Elektrochemische Einrichtung (1) nach einem der Ansprüche 1 bis 10, **dadurch gekennzeichnet, dass** eine Querschnittsfläche der ersten Lasche (300) senkrecht zu einem Erstreckungsweg derselben s₁ mm² beträgt, eine Querschnittsfläche der zweiten Lasche (400) senkrecht zu einem Erstreckungsweg derselben s₂ mm² beträgt, und s₁ > s₂.

12. Elektrochemische Einrichtung (1) nach einem der Ansprüche 2 bis 11, **dadurch gekennzeichnet, dass** das Gehäuse (100) einen Körperabschnitt (130) und einen mit dem Körperabschnitt (130) verbundenen Dichtungsabschnitt (140) umfasst, der Körperabschnitt (130) mit einer Aufnahmekammer (103) versehen ist, die Elektrodenbaugruppe (200) in der Aufnahmekammer (103) aufgenommen ist und die erste Lasche (300) durch den Dichtungsabschnitt (140) tritt, um sich aus dem Gehäuse (100) heraus zu erstrecken;
das Gehäuse (100) mit einer dritten Oberfläche (101) und einer vierten Oberfläche (102) versehen ist, wobei die erste Oberfläche (201) und die zweite Oberfläche (202) einander in der Dickenrichtung (Z) gegenüberliegen; und
in der Dickenrichtung (Z) die dritte Oberfläche (101), die erste Oberfläche (201), die zweite Oberfläche (202) und die vierte Oberfläche (102) der Reihe nach angeordnet sind; und in der Dickenrichtung (Z) ein Abstand (D₁₁) von einer Seite des Dichtungsabschnitts (140), die der dritten Oberfläche (101) zugewandt ist, zur dritten Oberfläche (101) größer ist als ein Abstand (D₁₂) von einer Seite des Dichtungsabschnitts (140), die der vierten Oberfläche (102) zugewandt ist, zur vierten Oberfläche (102).

13. Elektrochemische Einrichtung (1) nach einem der Ansprüche 1 bis 12, **dadurch gekennzeichnet, dass** die erste Elektrodenplatte (210) weiter eine erste aktive Materialschicht (212) umfasst, die auf dem ersten Stromabnehmer (211) angeordnet ist, in der ersten aktiven Materialschicht (212) ein erster konkaver Abschnitt (2121) angeordnet ist, der erste konkave Abschnitt (2121) den ersten Stromabnehmer (211) freilegt und die erste Lasche (300) an dem ersten konkaven Abschnitt (2121) angeordnet und mit dem ersten Stromabnehmer (211) verbunden ist.

14. Elektronische Einrichtung (1), die die elektrochemische Einrichtung (1) nach einem der Ansprüche 1 bis 13 umfasst.

## Revendications

1. Appareil électrochimique (1), comprenant :
un boîtier (100) ;
un ensemble d'électrodes (200) logé dans le boîtier (100) et comprenant une première plaque d'électrode (210), une seconde plaque d'électrode (220) et un séparateur disposé entre la première plaque d'électrode (210) et la seconde plaque d'électrode (220) ; dans lequel la première plaque d'électrode (210), la seconde plaque d'électrode (220) et le séparateur (230) sont empilés puis enroulés ; la première plaque d'électrode (210) comprend un premier collecteur de courant (211), la seconde plaque d'électrode (220) comprend un second collecteur de courant (221) et une pluralité de bandes conductrices (223) disposées d'un seul tenant avec le second collecteur de courant (221), la pluralité de bandes conductrices (223) font saillie du second collecteur de courant (221) le long d'une première direction (X), la pluralité de bandes conductrices (223) sont empilées dans une direction d'épaisseur de l'ensemble d'électrodes (200) pour former une partie de collecte (224), et la première direction (X) est perpendiculaire à la direction d'épaisseur (Z) ;
une première languette (300) connectée directement à la première plaque d'électrode (210) et faite d'une structure en feuille s'étendant globalement en une forme courbée, la première languette (300) comprenant une première partie (310), une deuxième partie (320) et une troisième partie (330) ; la première partie (310), la deuxième partie (320) et la troisième partie (330) étant connectées en séquence, la première partie (310) étant connectée au premier collecteur de courant (211), la deuxième partie (320) étant située à l'extérieur du premier collecteur de courant (211) et disposée de manière courbée, et la troisième partie (330) s'étendant hors du boîtier (100) ; et
une deuxième languette (400) reliée à la partie collectrice (224) et s'étendant hors du boîtier (100).

2. Appareil électrochimique (1) selon la revendication 1, **caractérisé en ce que** l'ensemble d'électrodes (200) présente une première surface (201) et une seconde surface (202), la première surface (201) et la seconde surface (202) étant opposées dans le sens de l'épaisseur (Z) ; et
la deuxième partie (320) comprend une première section de connexion (321) et une deuxième section de connexion (322) ;
une extrémité de la première section de connexion (321) est connectée à la première partie (310) et une autre extrémité de la première section de connexion (321) s'étend vers la première surface (201) ; et
la deuxième section de connexion (322) est située sur un côté de la première section de connexion (321), une extrémité de la deuxième section de connexion (322) étant connectée à une extrémité de la première section de connexion (321), et une autre extrémité de la deuxième section de connexion (322) étant connectée à une extrémité de la troisième partie (330).

3. Appareil électrochimique (1) selon la revendication 2, **caractérisé en ce que** la seconde partie (320) comprend en outre une section de courbure (323) ; une extrémité de la section de courbure (323) est connectée à une extrémité de la première section de connexion (321) tournée vers la première surface (201), et une autre extrémité de la section de courbure (323) est connectée à une extrémité de la seconde section de connexion (322) tournée vers la première surface (201).

4. Appareil électrochimique (1) selon la revendication 2 ou 3, **caractérisé en ce que** l'épaisseur de l'ensemble d'électrodes (200) dans la direction de l'épaisseur (Z) est L₁ mm ;
dans une deuxième direction (Y), une distance entre une partie chevauchante de la première partie (310) et le premier collecteur de courant (211) dans la direction de l'épaisseur (Z) et la première surface (201) est L₂ mm, 0,6 ≤ L₂/ L₁ ≤ 0,9 ; et
la deuxième direction (Y) est perpendiculaire à la première direction (X) et à la direction de l'épaisseur (Z).

5. Appareil électrochimique (1) selon la revendication 2 ou 3, **caractérisé en ce que** la distance entre une partie de chevauchement de la première partie (310) et le premier collecteur de courant (211) dans la direction de l'épaisseur (Z) et la première surface (201) est de L₂ mm ;
dans une deuxième direction (Y), dans la direction de l'épaisseur (Z), une distance de la deuxième partie (320) à la première surface (201) est L₃ mm, 0,75 ≤ (L₂ - L₃)/ L₂ ≤ 1 ; et
la deuxième direction (Y) est perpendiculaire à la première direction (X) et à la direction de l'épaisseur (Z).

6. Appareil électrochimique (1) selon la revendication 2 ou 3, **caractérisé en ce qu'**une distance entre l'extrémité de la troisième partie (330) et la première surface (201) dans la direction de l'épaisseur (Z) est L₄₁ mm, et dans une seconde direction (Y), une distance entre un côté de la première partie (310) opposé à la première surface (201) et le premier collecteur de courant (211) dans la direction de l'épaisseur (Z) et la première surface (201) est L₄₂ mm, L₄₁/ L₄₂ ≤ 1,1, et
la seconde direction (Y) est perpendiculaire à la première direction (X) et à la direction de l'épaisseur (Z).

7. Appareil électrochimique (1) selon l'une quelconque des revendications 1 à 6, **caractérisé en ce qu'**une longueur de la première partie (310) au-delà d'un bord du deuxième collecteur de courant (221) est L₅ mm ; et 0,2 ≤ L₅ ≤ 2.

8. Appareil électrochimique (1) selon l'une quelconque des revendications 1 à 6, **caractérisé en ce que** le boîtier (100) comprend un corps (130) et une partie d'étanchéité (140) reliée au corps (130), le corps (130) étant pourvu d'une chambre de réception (103), l'ensemble d'électrodes (200) étant logé dans la chambre de réception (103) ; la première languette (300) et la deuxième languette (400) traversent la partie d'étanchéité (140) pour sortir du boîtier (100) ; et
une longueur de la troisième partie (330) s'étendant dans la première direction (X) dans la chambre de réception (103) est L₆₁, et une longueur de la deuxième languette (400) s'étendant dans la première direction (X) dans la chambre de réception (103) est L₆₂, et | L₆₁ - L₆₂| ≤ 1 mm.

9. Appareil électrochimique (1) selon l'une quelconque des revendications 1 à 8, **caractérisé en ce que** la première languette (300) est soudée au premier collecteur de courant (211).

10. Appareil électrochimique (1) selon l'une quelconque des revendications 1 à 9, **caractérisé en ce que** la première plaque d'électrode (210) est une plaque d'électrode d'anode, et la seconde plaque d'électrode (220) est une plaque d'électrode de cathode ; et
un matériau de la première languette (300) comprend du cuivre, un alliage de cuivre, du nickel ou un alliage de nickel ; et un matériau de la seconde languette (400) comprend de l'aluminium ou un alliage d'aluminium.

11. Appareil électrochimique (1) selon l'une quelconque des revendications 1 à 10, **caractérisé en ce qu'**une section transversale de la première languette (300) perpendiculaire à une trajectoire d'extension de celle-ci est s₁ mm², une section transversale de la deuxième languette (400) perpendiculaire à une trajectoire d'extension de celle-ci est s₂ mm², et s₁ > s₂.

12. Appareil électrochimique (1) selon l'une quelconque des revendications 2 à 11, **caractérisé en ce que** le boîtier (100) comprend une partie corps (130) et une partie d'étanchéité (140) reliée à la partie corps (130), la partie corps (130) est pourvue d'une chambre de logement (103), l'ensemble électrode (200) est logé dans la chambre de logement (103), et la première languette (300) traverse la partie d'étanchéité (140) pour s'étendre hors du boîtier (100) ;
le boîtier (100) est pourvu d'une troisième surface (101) et d'une quatrième surface (102), la première surface (201) et la deuxième surface (202) étant opposées l'une à l'autre dans le sens de l'épaisseur (Z) ; et
dans la direction de l'épaisseur (Z), la troisième surface (101), la première surface (201), la deuxième surface (202) et la quatrième surface (102) sont disposées séquentiellement, et dans la direction d'épaisseur (Z), une distance (D₁₁) depuis un côté de la partie d'étanchéité (140) en regard de la troisième surface (101) à la troisième surface (101) est supérieure à une distance (D₁₂) de la partie d'étanchéité (140) en regard de la quatrième surface (102) à la quatrième surface (102).

13. Appareil électrochimique (1) selon l'une quelconque des revendications 1 à 12, **caractérisé en ce que** la première plaque d'électrode (210) comprend en outre une première couche de matériau actif (212) disposée sur le premier collecteur de courant (211), une première partie concave (2121) est disposée sur la première couche de matériau actif (212), la première partie concave (2121) expose le premier collecteur de courant (211), et la première languette (300) est disposée au niveau de la première partie concave (2121) et connectée au premier collecteur de courant (211).

14. Appareil électronique (1), comprenant l'appareil électrochimique (1) selon l'une quelconque des revendications 1 à 13.
